(19) **Europäisches Patentamt**
**European Patent Office**
**Office européen des brevets**

(11) **EP 2 884 784 A1**

(12) **EUROPEAN PATENT APPLICATION**

(43) Date of publication:
**17.06.2015 Bulletin 2015/25**

(51) Int Cl.:
*H04W 12/02* (2009.01)   *H04W 12/08* (2009.01)
*H04W 4/00* (2009.01)   *G06F 21/56* (2013.01)
*G06F 21/57* (2013.01)

(21) Application number: **13306695.1**

(22) Date of filing: **11.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Mathur, Akhi**
**560045 Bangalore (IN)**

(74) Representative: **Mouney, Jérôme et al**
**Alcatel-Lucent International**
**148/152 route de la Reine**
**92100 Boulogne-Billancourt (FR)**

(54) **Privacy ratings for applications of mobile terminals**

(57) For computing privacy ratings for an application that is stored in an application server (AS) and is able to be downloaded by a mobile device (MD), the application server (AS) produces a list (LPR) of private resources associated with the application, after having performed a static program analysis on an executable file of the application, produces a survey (SV) based on the list (LPR) of private resources, the survey evaluating the perception of a user with respect to the private resources the application can access, sends the survey to a set of users being subscribers to the application server and receiving survey responses from the set of users, and computes a privacy score of the application based on a set of selected survey responses, when a user attempts to download the application.

FIG. 3

S1

AS, DB : application
AM : LPR(application)

S2

AM : SV(LPR)

S3

AM → [SV] → users
users → [responses] → AS, AM

S4

AM : privacy score of application

EP 2 884 784 A1

**Description**

FIELD OF THE INVENTION

The present invention pertains to the privacy ratings for applications used by mobile terminals, such as smart phones.

BACKGROUND

With the popularity of application markets, there has been a tremendous growth in the number of smart phone applications. While these applications do provide utility and benefits to the end-users, many of them also collect sensitive personal information from the phone and share it with third parties, often without user's full knowledge.
There is a notion of "application ratings" in application stores which inform the user about the usefulness and quality of the application. However, currently there is no concept of a "privacy rating" of an application which can inform the users of the application's privacy effectiveness. There are several reasons why "privacy ratings" are difficult to compute;

> a) The users (or rating providers) currently have no way of knowing what an application is capable of doing in the background (e.g. whether it can leak certain data or not), so it becomes hard to rate an app on privacy;
> b) Privacy-breaches are very contextual in nature. While accessing of a certain data type may be acceptable in some applications, it may be considered privacy-breaching in other applications. For example, if a location based service asks for fine-grained location, a user may be willing to provide it - however if a Calculator application asks for location information, it may be considered privacy-breaching. Therefore, just by looking at the type of the data an app accesses, it is impossible to arrive at a privacy rating;
> c) The notions of privacy are also heavily dependent on the social setting in which a user lives. Researchers have demonstrated major differences in the privacy perceptions of users from US, Europe, India and China.

Therefore, there is a need to come up with a generic framework which enables the creation of effective, universally acceptable "privacy ratings" for an application. It seems a very crucial and relevant problem to solve, given that more and more companies are getting into the business of distributing smartphone applications and there is increasing pressure from governments on these companies to better inform the users about privacy behaviors of applications.

SUMMARY

This summary is provided to introduce concepts related to the present inventive subject matter. This summary is not intended to identify essential features of the claimed subject matter nor is it intended for use in determining or limiting the scope of the claimed subject matter.
In accordance with one embodiment, a method is provided for computing privacy ratings for an application that is stored in an application server and is able to be downloaded by a mobile device, comprising the following steps in said application server:

> producing a list of private resources associated with the application, after having performed a static program analysis on an executable file of the application,
> producing a survey based on the list of private resources, the survey evaluating the perception of a user with respect to the private resources the application can access,
> sending the survey to a set of users being subscribers to the application server and receiving survey responses from the set of users,
> when a user attempts to download the application, computing a privacy score of the application based on a set of selected survey responses.

Advantageously, the invention offers a solution based on a static analysis on the executable of the application to uncover the underlying privacy architecture, and a calculation of privacy ratings using responses of the user's social network, which are gathered through crowd sourcing. Due to the involvement of user's social context, the privacy ratings will be more acceptable to the end-users.
In an embodiment, the privacy score is shown to the user.
In an embodiment, the list of private resources is produced from a permission architecture of the application extracted after the static program analysis on the executable file of the application.
In an embodiment, the survey describes a summary of the application features and lists questions about the access of private resources by the application.

In an embodiment, the set of selected survey responses is related to other users having contextual similarity to said user.

In an embodiment, at least some responses of the set of selected survey responses are associated respectively with other users belonging to a social network of said user.

In an embodiment, at least some responses of the set of selected survey responses are associated respectively with other users having similar application preferences as said user.

In an embodiment, at least some responses of the set of selected survey responses are associated respectively with other users living in the same geographical area as said user.

In an embodiment, the set of selected survey responses comprises at least a subset of survey responses that are aggregated in an array, comprising elements each being a score expressed as a percentage of other users having positively answered to a question of the survey, each subset of survey responses being associated with a weight.

In an embodiment, the computing the privacy score of the application comprises the following steps:

for each array, calculating a distance of each element from a threshold and adding the distance to a penalty value if the distance is positive,
calculating an average of the penalty values, yielding an average value,
multiplying the average value of each array by the weight associated with the array, yielding a weighted average value.
computing the privacy score as a difference between a predefined maximal value and the sum of each weighted average value.

The invention also pertains to an application server computing privacy ratings for an application that is stored in an application server and is able to be downloaded by a mobile device, the application server comprising:

means for producing a list of private resources associated with the application, after having performed a static program analysis on an executable file of the application,
means for producing a survey based on the list of private resources, the survey evaluating the perception of a user with respect to the private resources the application can access,
means for sending the survey to a set of users being subscribers to the application server and receiving survey responses from the set of users,
means for computing a privacy score of the application based on a set of selected survey responses, when a user attempts to download the application.

The invention also pertains to a computer program capable of being implemented within an application server, said program comprising instructions which, when the program is executed within said application server, carry out steps of the method according to the invention.

BRIEF DESCRIPTION OF THE FIGURES

The present invention and the benefits thereof shall be better understood upon examining the description below, which makes reference to the attached figures, in which:

- FIG. 1 is a schematic block diagram of a communication system according to one embodiment of the invention for computing privacy ratings for an application;
- FIG. 2 is an exemplary illustration of a survey about a calendar application; and
- FIG. 3 is an algorithm of a method for computing privacy ratings for an application according to one embodiment of the invention.

The same reference number represents the same element or the same type of element on all drawings.

DESCRIPTION OF EMBODIMENTS

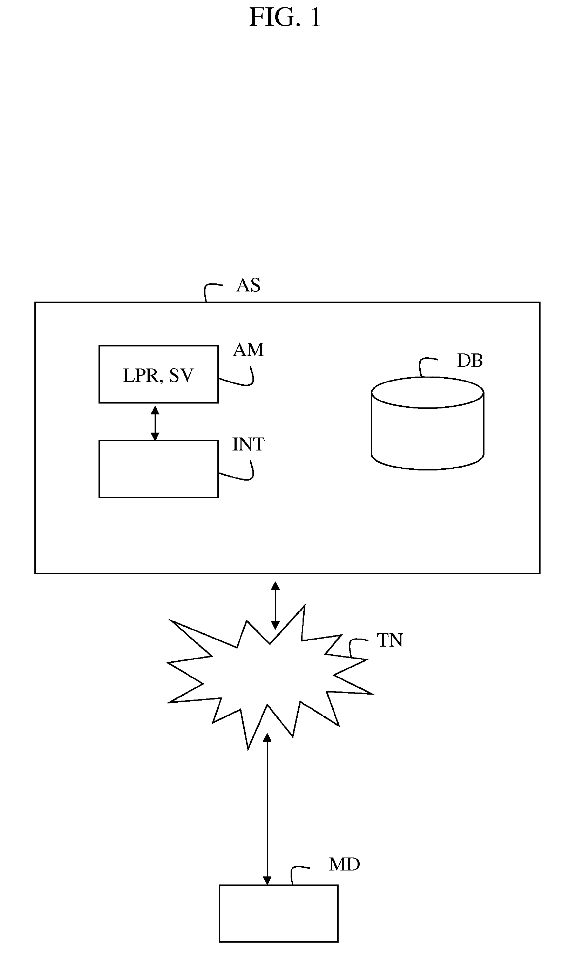

With reference to FIG. 1, a communication system according to the invention comprises a telecommunication network TN, an application server AS and a mobile device MD able to communicate between them through the telecommunication network.

The telecommunication network TN may be a wired or wireless network, or a combination of wired and wireless networks.

The telecommunication network TN can comprise a packet network, for example, an IP ("Internet Protocol") high-speed network such as the Internet or an intranet, or even a company-specific private network.

The mobile device MD can be a radio communication mobile terminal. For example, the mobile device MD is a mobile phone, or is a communicating Personal Digital Assistant PDA, or an intelligent telephone like SmartPhone, or a tablet.

In an example, the mobile device MD is a cellular mobile radio communication terminal, connected by a channel to a radio access network of the telecommunication network TN, e.g. GSM (Global System for Mobile communications) or UMTS (Universal Mobile Telecommunications System) or LTE (Long Term Evolution).

In another example, the mobile device MD is a tablet connected to the telecommunication network TN via a WiFi access.

The application server AS is an online marketplace where users of mobile devices can browse, purchase, and download applications.

The application server AS comprises a database DB, an interface INT, an analysis module AM.

Applications are stored in the database DB of the application server as files that can be downloaded by mobile devices and then installed and executed on them.

The interface INT allows communications with mobile devices through the telecommunication network and permits users to browse, purchase, and download applications.

The analysis module AM takes the executable file of an application and performs static program analysis on it. Static program analysis is a technique of analyzing computer software without actually executing it. The analysis returns an object which consists of various kinds of information about the files package of the application - e.g. code flows, call graphs, permission architecture etc.

From the output of static analysis, the analysis module AM extracts only the permission architecture of the application. The permission architecture shows the kinds of private resources of a mobile device that the application can access. The analysis module AM produces a list LPR of private resources associated with the application.

The analysis module AM creates a survey SV based on the list LPR of private resources.

The survey indicates the participants about the basic details of the application, which can be extracted from the app description submitted by the developer of the application.

The survey further indicates the participants about the private resources the application can access and asks them if this behavior is in line with their expectations. This can be done via a list of questions whose possible answers are "YES" or "NO" for example.

The analysis module AM sends the survey to the users of the application server, under the format of a file for example, and then records the received responses from the users.

When a given user attempts to download or install the application, the analysis module AM computes a privacy score of the application based on survey responses selected from users of a social network of said given user. This privacy score is shown to said given user which can help him/her in deciding whether to continue with the application installation or not.

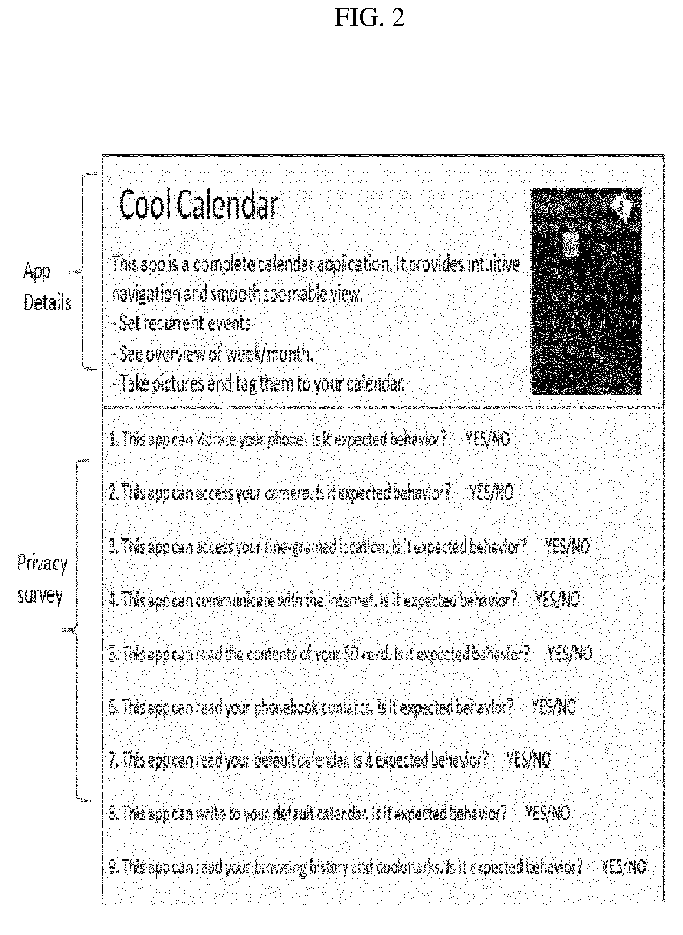

With reference to FIG. 2, a survey about an application called "Cool Calendar" is illustrated.

The survey contains a first part "App Details" describing a summary of the application features, with an exemplary image of the application. These details can be extracted from an official description of the application provided by the developer.

The survey contains a second part "Privacy survey" listing questions about the access of private resources. The question can be automatically produced based on the list LPR of private resources.

In this example, the list LPR contains the following resources: LPR = {VIBRATE, CAMERA, ACCESS_FINE_LOCATION, INTERNET, READ_SD_CARD, READ_CONTACTS, READ_CALENDAR, WRITE_CALENDAR, READ_HISTORY_BOOKMARKS}.

For example, question 3 asks if it is expected behavior for the participant that the Cool Calendar can access the fine-grained location.

The participant having received the survey can have a possible answer "YES" or "NO" for each question.

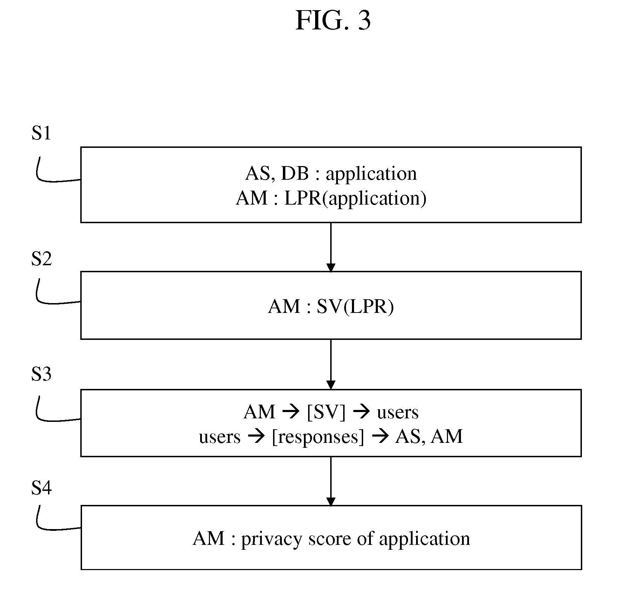

With reference to FIG. 3, a method for computing privacy ratings for an application according to one embodiment of the invention comprises steps S1 to S4 executed within the communication system.

It is assumed that the application server AS is an online marketplace that manages profiles of users that have subscribed to services offered by the application server AS.

A profile can contain many details including the age, gender, location, qualification, occupation, spending habits, traveling habits and any other identifying characteristic or attribute of the user.

The set of users constitute a global social network managed by the application server AS. Also, the application server may have communication links with multiple operators of connected networks and may access the details of the users in the connected networks.

In step S1, the application server AS receives and stores an application from a developer in the database DB.

The analysis module AM of the application server AS retrieves the executable file of the application and performs a static program analysis on the executable file.

As result of the static program analysis, the analysis module extracts the permission architecture of the application.

The permission architecture shows the kinds of private resources of a mobile device that the application can access. The analysis module AM produces a list LPR of private resources associated with the application.

In step S2, the analysis module AM produces a survey SV based on the list LPR of private resources. The survey SV can be under the form of a file including multimedia items, such as video, audio, image or text. The survey indicates the participants about the private resources the application can access and asks them if this behavior is in line with their expectations. In other terms, the survey evaluates the perception of a user with respect to the application privacy architecture.

In step S3, the analysis module AM selects users subscribed to the application server and sends the survey to the selected users.

The analysis module AM then receives responses from selected users and stores the responses.

For each user having responded to the survey, the response is stored in correspondence with the profile of the user and an identifier of the application.

In step S4, when a user attempts to download or install the application, the analysis module AM computes a privacy score of the application based on a set of selected survey responses, the responses being retrieved by means of the identifier of the application.

The privacy score is shown to the user, which can help the user in deciding whether to continue or not with the application installation.

Hereinafter is described a way to compute the privacy score.

All the responses to the survey can be aggregated in an array, for example called "all_responses", containing nine elements corresponding to the nine questions as illustrated in FIG. 2. Each element is a score expressed as a percentage of people having selected YES as answer. For example for the first question, if 70% of the people found that vibrating of the phone is expected behavior of the calendar application, then all_responses[1] = 70.

For example, the survey can provide the following result: all_responses[9] = [70,90,20,95,20,10,100,100,10].

From the list of all the responses are extracted:

a) the responses of user's friend network
b) the responses of people with similar application preferences as the user.

In this case, the three following arrays can be defined:

friend_responses[9] = [50,80,30,90,20,10,100,100,5];
similar_people_responses[9] = [60,90,10,95,10,0,100,100,0];
remaining_responses[9] = [80,92,20,97,24,15,100,100,25];

In other examples; responses can be extracted from people living in the same geographical area, like city or country, as the user, or from people having same sex and age decade as the user, or from people with similar interests as the user. Extracted responses should come from people having some contextual similarity to the user, hence their privacy perceptions may be closer to that of the user.

Two parameters can then be defined:

a) *privacy_threshold:* which signifies the percentage of positive responses below which we consider a certain behavior as privacy hazard. For example, if threshold is 70, then any application behavior (e.g. camera access) which gets less than 70% positive responses in the survey is considered as privacy invasive.
b) *weights:* We assign weights ($w_i$), ($0 <= w_i <= 1$, sum($w_i$) = 1) to the various response arrays (friends_responses, similar_people_responses, remaining_responses). For example, similar_people_responses array has a high weight 0.6 because it may be the most representative of user's privacy perceptions, whereas remaining_responses has a low weight 0.1 because it may not be much close to the user's perceptions.

For each of the response arrays, the distance of each survey response from the *privacy_threshold* is calculated (distance = privacy_threshold - response score). If this distance is greater than 0, i.e. the survey response is below *privacy_threshold* which implies a privacy breach, we add the distance to a penalty value. After adding penalties for each survey response, we take an average of the penalty value.

Taking the example of friend_responses array:

friend_responses[9] = [50,80,30,90,20,10,100,100,5]

threshold = 70

$$\text{penalty (friend)} = (70\text{-}50) + 0 \text{ (distance is less than 0, so no penalty)} + (70\text{-}30) + 0 + (70\text{-}20) + (70\text{-}10) + 0 + 0 + (70\text{-}5) = 235$$

avg_penalty (friend) = 235/9 = 26.11

In a final step, the average penalty value for each response array is multiplied with its corresponding weight. The privacy score can be computed as following:

$$\text{PRIVACY\_SCORE} = 100 - (\text{avg\_penalty(friend)} * \text{weight(friend)} + \text{avg\_penalty(similar\_user)} * \text{weight(similar\_user)} + \text{avg\_penalty(remaining)} * \text{weight(remaining)}).$$

In this example, the value "100" is taken as a predefined maximal value.

The invention described here relates to a method and an application server node for computing privacy ratings for an application. According to one implementation of the invention, the steps of the invention are determined by the instructions of a computer program incorporated into a server, such as the application server AS. The program comprises program instructions which, when said program is loaded and executed within the server, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for computing privacy ratings for an application that is stored in an application server (AS) and is able to be downloaded by a mobile device (MD), comprising the following steps in said application server (AS):

   producing (S1) a list (LPR) of private resources associated with the application, after having performed a static program analysis on an executable file of the application,
   producing (S2) a survey (SV) based on the list (LPR) of private resources, the survey evaluating the perception of a user with respect to the private resources the application can access,
   sending (S3) the survey to a set of users being subscribers to the application server and receiving survey responses from the set of users,
   when a user attempts to download the application, computing (S4) a privacy score of the application based on a set of selected survey responses.

2. A method according to claim 1, wherein the privacy score is shown to the user.

3. A method according to claim 1 or 2, wherein the list (LPR) of private resources is produced from a permission architecture of the application extracted after the static program analysis on the executable file of the application.

4. A method according to any of claims 1 to 3, wherein the survey describes a summary of the application features and lists questions about the access of private resources by the application.

5. A method according to any of claims 1 to 4, wherein the set of selected survey responses is related to other users having contextual similarity to said user.

6. A method according to claim 5, wherein at least some responses of the set of selected survey responses are associated respectively with other users belonging to a social network of said user.

7. A method according to any of claims 5 and 6, wherein at least some responses of the set of selected survey responses are associated respectively with other users having similar application preferences as said user.

8. A method according to any of claims 5 to 7, wherein at least some responses of the set of selected survey responses are associated respectively with other users living in the same geographical area as said user.

9. A method according to any of claims 1 to 8, wherein the set of selected survey responses comprises at least a subset of survey responses that are aggregated in an array, comprising elements each being a score expressed as a percentage of other users having positively answered to a question of the survey, each subset of survey responses being associated with a weight.

10. A method according to claim 9, wherein the computing the privacy score of the application comprises the following steps:

for each array, calculating a distance of each element from a threshold and adding the distance to a penalty value if the distance is positive,
calculating an average of the penalty values, yielding an average value,
multiplying the average value of each array by the weight associated with the array, yielding a weighted average value.
computing the privacy score as a difference between a predefined maximal value and the sum of each weighted average value.

11. An application server (AS) for computing privacy ratings for an application that is stored in an application server (AS) and is able to be downloaded by a mobile device (MD), the application server (AS) comprising:

means (AM) for producing a list (LPR) of private resources associated with the application, after having performed a static program analysis on an executable file of the application,
means (AM) for producing a survey (SV) based on the list (LPR) of private resources, the survey evaluating the perception of a user with respect to the private resources the application can access,
means (AM) for sending the survey to a set of users being subscribers to the application server and receiving survey responses from the set of users,
means (AM) for computing a privacy score of the application based on a set of selected survey responses, when a user attempts to download the application.

12. A computer program capable of being implemented within an application server (AS) for computing privacy ratings for an application that is stored in the application server (AS) and is able to be downloaded by a mobile device (MD),said program comprising instructions which, when the program is loaded and executed within said application server, carry out the following steps:

producing (S1) a list (LPR) of private resources associated with the application, after having performed a static program analysis on an executable file of the application,
producing (S2) a survey (SV) based on the list (LPR) of private resources, the survey evaluating the perception of a user with respect to the private resources the application can access,
sending (S3) the survey to a set of users being subscribers to the application server and receiving survey responses from the set of users,
when a user attempts to download the application, computing (S4) a privacy score of the application based on a set of selected survey responses.

# FIG. 1

# FIG. 2

App
Details

## Cool Calendar

This app is a complete calendar application. It provides intuitive navigation and smooth zoomable view.
- Set recurrent events
- See overview of week/month.
- Take pictures and tag them to your calendar.

Privacy
survey

1. This app can vibrate your phone. Is it expected behavior?    YES/NO

2. This app can access your camera. Is it expected behavior?    YES/NO

3. This app can access your fine-grained location. Is it expected behavior?    YES/NO

4. This app can communicate with the Internet. Is it expected behavior?    YES/NO

5. This app can read the contents of your SD card. Is it expected behavior?    YES/NO

6. This app can read your phonebook contacts. Is it expected behavior?    YES/NO

7. This app can read your default calendar. Is it expected behavior?    YES/NO

8. This app can write to your default calendar. Is it expected behavior?    YES/NO

9. This app can read your browsing history and bookmarks. Is it expected behavior?    YES/NO

# FIG. 3

S1

| AS, DB : application<br>AM : LPR(application) |
|---|

S2

| AM : SV(LPR) |
|---|

S3

| AM → [SV] → users<br>users → [responses] → AS, AM |
|---|

S4

| AM : privacy score of application |
|---|

Europäisches
Patentamt

European
Patent Office

Office européen
des brevets

## EUROPEAN SEARCH REPORT

Application Number

EP 13 30 6695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/072991 A1 (BELANI ROHYT [US] ET AL) 22 March 2012 (2012-03-22) * abstract * * paragraph [0017] - paragraph [0039] * * paragraph [0057] - paragraph [0066] * ----- | 1-12 | INV. H04W12/02 H04W12/08 H04W4/00 G06F21/56 G06F21/57 |
| X | US 2013/212684 A1 (LI XUYANG [US] ET AL) 15 August 2013 (2013-08-15) * paragraph [0004] * * paragraph [0016] * * paragraph [0022] - paragraph [0023] * * paragraph [0027] * * paragraph [0057] - paragraph [0062] * ----- | 1-12 | |
| X | US 2013/185804 A1 (BISWAS DEBMALYA [CH] ET AL) 18 July 2013 (2013-07-18) * paragraph [0027] - paragraph [0031] * * paragraph [0041] - paragraph [0042] * * paragraph [0054] * ----- | 1-12 | |

TECHNICAL FIELDS
SEARCHED (IPC)

H04W
G06F

The present search report has been drawn up for all claims

| Place of search | Date of completion of the search | Examiner |
|---|---|---|
| The Hague | 30 April 2014 | Lamelas Polo, Yvan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 30 6695

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2014

| Patent document cited in search report | | Publication date | Patent family member(s) | | Publication date |
|---|---|---|---|---|---|
| US 2012072991 | A1 | 22-03-2012 | US | 2012072991 A1 | 22-03-2012 |
| | | | US | 2012110674 A1 | 03-05-2012 |
| US 2013212684 | A1 | 15-08-2013 | US | 2013185292 A1 | 18-07-2013 |
| | | | US | 2013212684 A1 | 15-08-2013 |
| | | | US | 2014019456 A1 | 16-01-2014 |
| US 2013185804 | A1 | 18-07-2013 | NONE | | |

EPO FORM P0459